Europäisches Patentamt

European Patent Office

Office européen des brevets

(11) Publication number: **0 297 627 B1**

# EUROPEAN PATENT SPECIFICATION

(45) Date of publication of patent specification: **18.03.92**  (51) Int. Cl.⁵: **G06K 9/62**

(21) Application number: **88111211.4**

(22) Date of filing: **09.04.84**

(60) Publication number of the earlier application in accordance with Art.76 EPC: **0 124 789**

(54) **Method of identifying objects.**

(30) Priority: **11.04.83 JP 63370/83**
**27.04.83 JP 74464/83**

(43) Date of publication of application:
**04.01.89 Bulletin 89/01**

(45) Publication of the grant of the patent:
**18.03.92 Bulletin 92/12**

(84) Designated Contracting States:
**CH DE FR GB IT LI SE**

(56) References cited:
**EP-A- 0 047 127**
**US-A- 3 947 833**
**US-A- 4 017 721**

(73) Proprietor: **KABUSHIKI KAISHA KOMATSU SEISAKUSHO**
**3-6, Akasaka 2-chome**
**Minato-ku Tokyo 107(JP)**

(72) Inventor: **Watanabe, Yuji**
**5-2-304, Ueno 2-chome**
**Hirakata-shi Osaka-fu(JP)**
Inventor: **Kondo, Toshiaki**
**4-4, Ueno 2-chome**
**Hirakata-shi Osaka-fu(JP)**

(74) Representative: **von Kirschbaum, Albrecht, Dipl.-Ing.**
**Hermann-Ehlers-Strasse 21a**
**W-8034 Germering(DE)**

**Description**

BACKGROUND OF THE INVENTION

1. Field of Invention

This invention relates to a method of identifying rod-like objects (10), having a uniform transverse profile over a predetermined length (L) thereof.

2. Description of the Prior Art

According to a prior art method of identifying an object to be detected (hereinafter, merely called an object) the object is photographed with an image pick-up device of an industrial television camera for example, the photographed picture is scanned, and a bright and dark pattern (brightness pattern) comprising image data of a predetermined number which are continuous in the direction of scanning is compared with a reference pattern which has been prepared previously and representing the brightness of the object. With this method, however, in spite of the fact that the picture is inputted with multistage tones, the actual processing of the data is made after converting the data into binary codes, such method is practical where electrical component parts can be assembled under satisfactory opitcal environment and high quality binary picture image can be obtained relatively readily. However, any special light source for image pick-up cannot be available so that the object is photographed under the influence of solar light, as the brightness pattern of the object varies greatly, correct identification of the pattern is impossible. Furthermore, background and noise may cause erroneous identification.

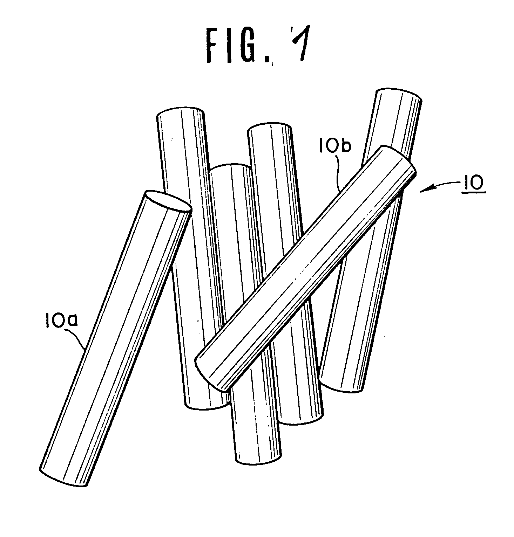

According to a prior art method of detecting an object to be detected (hereinafter, merely called an object) by utilizing an image pick-up device of an industrial television camera for example, a contour of an object whose brightness varies quickly is determined from binary encoded picture data obtained by the image pick-up device so as to precisely detect the object. This method, however, is practical under satisfactory optical environment and high quality binary picture image can be obtained relatively readily, and each object is distributed independently. However, under an adverse optical environment, it is necessary to eliminate background and noise as a prerequisite process to make a high quality picture image. And even the high quality picture image can be obtained but where the objects (rods) contact or overlap with each other as shown in Fig. 1, extraction of the contour of the rods 1 with binary encoding is difficult. Accordingly, it is difficult to detect proper rods (in this case, rods 1a and 1b on which other rods do not overlie so that they can be handled with an handling robbot).

Furthermore, according to the method of identifying the objects by comparing patterns, identification is made by judging whether or not an evaluation value representing the similarity of both patterns exceeds a threshold value set for the evaluation value, but where the evaluation value varies greatly in accordance with the size of the object, it is impossible to exactly evaluate the evaluation value even when the threshold value is set to an optimum value.

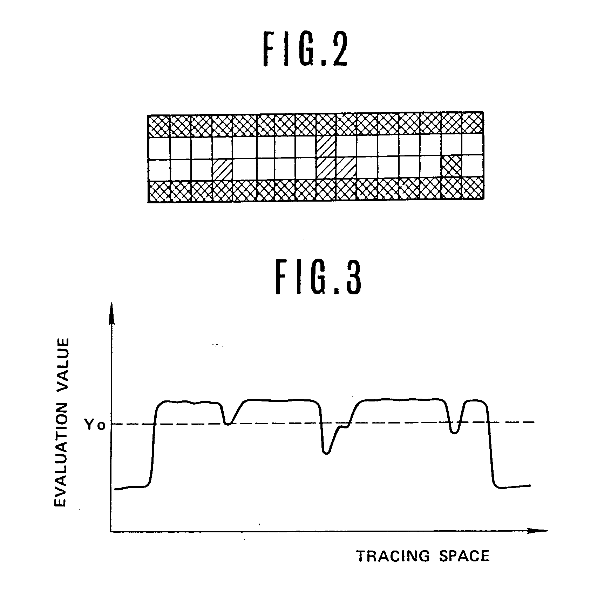

For example, let us consider a case wherein rods 10 are photographed with an industrial television (ITV) camera and 4 x 16 = 64 picture elements (see Fig.2) are obtained from the image information thus obtained. A graph as shown in Fig.3 can be obtained by determining an evaluation value utilizable as an index representing the cross-section of the rod from four picture elements comprising the cross-section of the rod and then depicting the evaluation value along the longitudinal direction of the rod. As can be noted by the comparison of Figs. 2 and 3, when the central portion of the rod becomes dark due to stain or spoil thereof, the evaluation value would vary greatly at such portion.

Where a definite threshold value $Y_0$ is set as shown in Fig.3, the region exceeding this threshold value would be cut by the dark portion of the rod, thus resulting in an erroneous evaluation of the length of the rod.

According to another prior art method of identification, a contour of an object whose brightness varies quickly is determined from binary encoded picture data obtained by an ITV camera so as to precisely detect the object.

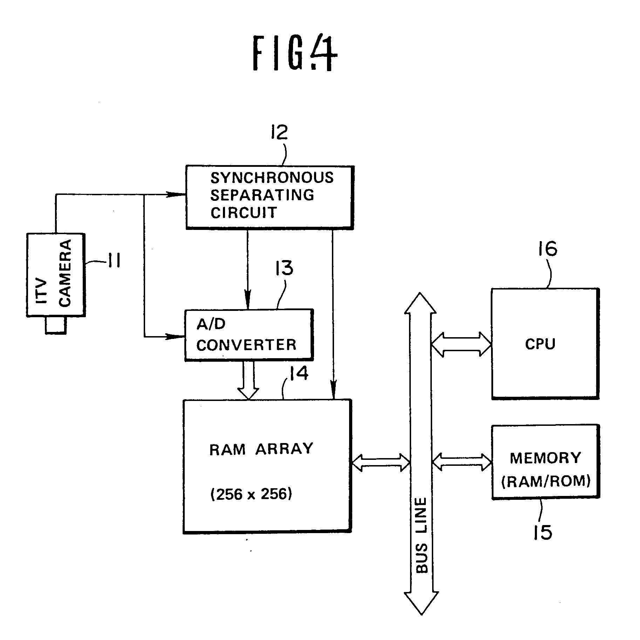

According to this method, a high quality picture image can be obtained but where the objects (rods) contact or overlap with each other as shown in Fig.4, extraction of the contour of the rods 10 with binary encoding is difficult. Accordingly, it is difficult to detect proper rods (in this case, rods 10a and 10b on which other rods do not overlie so that they can be handled with an handling robbot)

EP-A-0 047 127 published 10.03.82 teaches a method of detecting position of symmetric articles involving steps (1) sampling the data of a address $y_0$ to detect the presence or absence of the article having the known dimensions, then (2) sampling the address section $y_0$ - Y, if the article is not detected in step (1), and carrying out detection in the same manner as in step (1). Incidentally, Y is adjusted by 3b/4, i.e., 3/4 of known longitudinal size b of the article. In step (3), if the article is not detected by step (2) the address section $y_0$ + Y is sampled, and detection is carried out in the same manner as in step (1). In step (4), if the article is not detected at any of $y_0$, $y_0$ - Y and $y_0$ + Y, it is judged that the intended article is not present in a data sampling region.

## SUMMARY OF THE INVENTION

It is an object of this invention to provide a novel method of identifying objects capable of correctly identifying a proper object even under an adverse optical environment or in a states in which the objects contact with each other or are distributed randomly.

In view of the above background, it is an object of this invention to provide a novel method of tracing and judging rod-like objects capable of correctly judging a proper object even under an adverse optical environment or in a states in which the objects contact with each other or are distributed randomly.

In view of the above background, it is an object of the present invention to provide a novel method of setting threshold value capable of setting threshold value so as to correctly evaluate an evaluation value having noise without the influence of its noise.

According to a preferred feature this invention, when an evaluation value having continuity exceeds continuously or greatly a threshold value the fact that the succeeding evaluation values exceed the threshold value at a high probability is noted so as to vary the threshold value as a function of an already inputted evaluated value thereby avoiding erroneous evaluation of the evaluation value caused by noise.

According to this invention there is provided a method of identifying rod-like objects, having a uniform transverse profile over a predetermined length thereof comprising the steps of: preparing a reference pattern representing brightness of a predetermined number of picture elements in a transverse direction of said objects, said reference pattern being picture image data of said objects having a uniform transverse profile over a predetermined length thereof; sequentially extracting a set of object brightness patterns of a predetermined number of picture elements which lie contiguously in a X direction of rectangular coordinates from picture image data in a predetermined field of view in which said objects lie, while shifting successive said brightness patterns by one picture element in said X direction; detecting a time at which said objects are crossed on the basis of comparison between said object brightness pattern and said reference pattern; after detecting said time, extracting three object brightness trace search patterns of a predetermined number of picture elements regarding respectively a first position displaced by one picture element on a positive side in a Y direction of said rectangular coordinate with reference to a reference position corresponding to a position at which the transverse profile of the object is detected, said first position being displaced by one picture element on a negative side of said X direction with respect to said reference position, a second position same as said reference position and a third position displaced by one picture element on a positive side with reference to said reference position selecting an object brightness trace pattern most resembling said reference pattern among said three object brightness trace search patterns; judging whether said selected object brightness trace pattern is the object brightness pattern or not when said objects are crossed based on said selected object brightness trace pattern and said reference pattern; extracting further three object brightness trace search patterns by using a position of said selected object brightness trace pattern as a new reference position when said object brightness trace pattern is a pattern at the time of crossing said objects; repeating said judgment; storing the previous reference position of an object brightness trace pattern when the same is not the object brightness pattern at the time of crossing; processing the negative side in said Y directioin by using a position at which said crossing is detected as a reference position in the same manner as on the positive side in said Y direction; storing the previous reference position at which said trace pattern ceases to be the brightness pattern at the time of crossing said objects; determining a distance between said stored two reference positions, and identifying that a proper object is present when said distnce corresponds to said predetermined length of said objects.

According to a preferred embodiment of this invention there is provided a method of identifiyng rod-like objects comprising the steps of preparing a reference pattern representing brightness of a predetermined number of picture elements in a transverse direction of objects to be identified, said reference pattern being picture image data of said objects having a uniform transverse profile over a predetermined length thereof; sequentially extracting a set of object brightness patterns of a predetermined number of picture elements which lie contiguously in a X direction of rectangular coordinates from picture image data in a predetermined field of view in which said objects lie, while shifting successive said brightness patterns by one picture element in said X direction; detecting a crossing time of said objects on the basis of comparison between said object brightness patterns and said reference patterns; tracing in a Y direction of said rectangular coordinates a position of crossing said objects by utilizing a crossing detectiion position as a reference position; and while tracing, setting a threshold value Yn for a given evaluation value $y_n$ among successive groups of evaluation values representing a similarity between said object brightness trace patterns and said reference patterns as a function in which one or more evaluation values preceding said given evaluatioin value are variables, said threshold value $y_n$ having the relation

$$y_n = y_0 + \sum_{i=1}^{n-1} a_{n-1} \, y_{n-i}$$

where $a_{n-i}$ is a weighting coefficient representing the contribution of the $i^{th}$ preceeding evaluation value $y_{n-i}$ with $a_{n-i}$ generally decreasing as i increases such that said threshold value $y_n$ is samller than a constant threshold value $y_0$ when said one or more preceding evaluation values greatly exceeds said constant threshold value $y_0$ preset for said group of said evaluation values.

At the time of tracing and searching, where an evaluation value representing the similarity between the brightness pattern and the reference pattern exceeds contiguously or greatly a threshold value set for the evaluation value the fact that the succeeding evaluation values exceeds the threshold value at a high probability is noted so as to vary the threshold value as a function of an already inputted evaluated value thereby avoiding erroneous evaluation of the evaluation value caused by noise.

BRIEF DESCRIPTION OF THE DRAWINGS

In the accompanying drawings:

Fig. 1    is a plan view showing rods randomly distributed or arranged neatly;

Fig.2    is a graph showing picture elements showing one example of the brightness of a rod;

Fig.3    is a graph showing the relationship between evaluation values obtained from the picture elements shown in Fig.2 and a conventional threshold value;

Fig.4    is a block diagram showing one example of an apparatus utilized for carrying out the method of this invention;

Fig.5    shows one example of a memory area of a RAM array shown in Fig.10 and a picture element data stored in the area;

Fig.6    is a flow chart useful to explain one example of the picture image processing in a case where the cross-sectional position of a rod is traced;

Fig.7    is a graph showing the relationship between an evaluation value determined from the picture elements shown in Fig.2, and the treshold value utilized in this invention; and

Fig.8    is a block diagram showing one example of an electric circuit utilizing the method of determining the threshold value according to this invention.

Fig.4 is a diagrammatic block diagram showing one example of apparatus utilized for carrying out the method of this invention. In Fig.4, an ITV camera 11 photographs, with a predetermined field of view, rods 10 scattered on the floor of a factory, for example, as shown in Fig.1, and outputs a video composite signal containing a brightness signal of its input picture image to synchronous separating circuit 12 and an A/D converter 13. The synchronous separating circuit 12 separates a synchronizing signal from the video composite signal inputted thereto for designating an address of a random access memory array (RAM array) 14 based on the synchronizing signal. The A/D converter 13 converts the brightness signal of the input video composite signal into a picture image signal having sixteen brightness tone steps, and writes the converted picture image signal into the designated address position. In this manner, the RAM array 14 stores the data of one picture in its 256 x 256 memory areas.

A memory device 15 is prestored with a reference pattern showing the brightness of a predetermined number of picture elements (in this example, eleven) in the transverse direction, the picture elements representing the picture image data of the rods 10, and a picture image processing program according to the method of this invention.

A central processing unit (CPU) 16 executes the processing of the picture image based on the picture image data stored in the RAM array 14 and the picture image processing program.

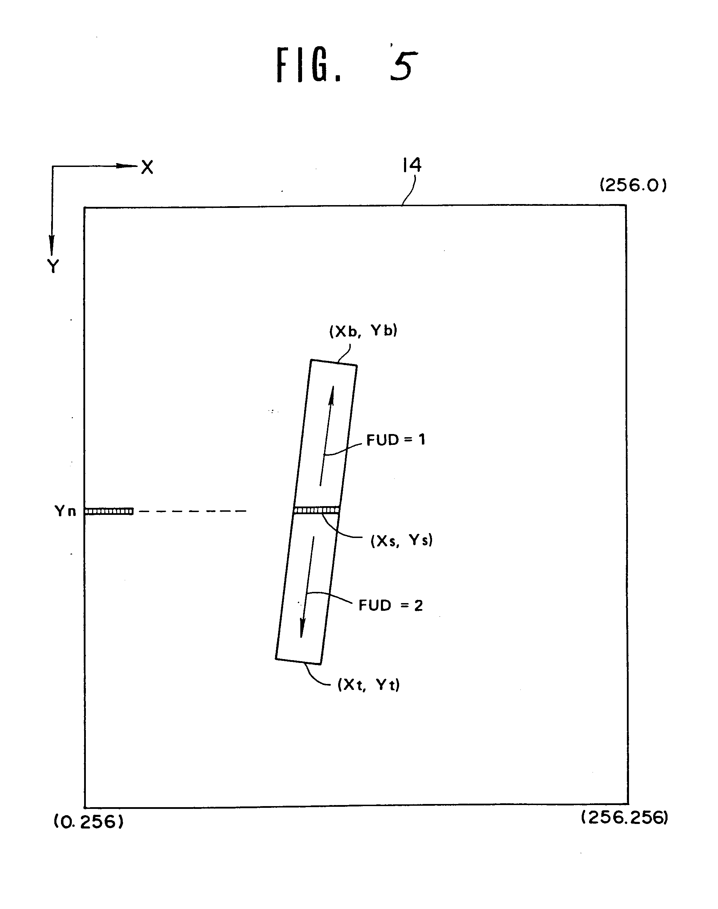

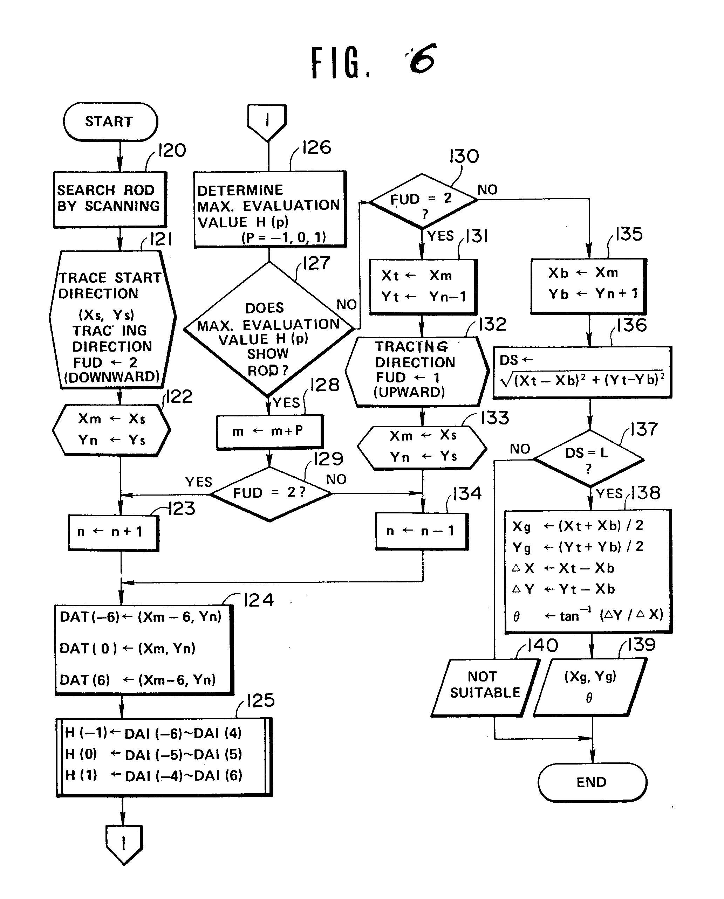

The procedure of processing a picture image after the transverse positions of rods have been detected will be described as follows with reference to the content of the RAM array 14 (Fig.4) shown in Fig.5 and a flow chart shown in Fig.6.

As shown in Fig.5, a brightness pattern comprising a group of image data of eleven picture elements is extracted from eleven address positions located contiguously in X direction from a position Yn in direction Y of the RAM array 14. By comparing this brightness pattern with a reference pattern prestored in the memory device 15, a judgment is made whether the brightness pattern is the brightness pattern of the transverse profile of a rod 10 or not. When the brightness pattern is not that of the transverse profile, the brightness pattern is again extracted from eleven address positions displaced by one picture element in X direction to execute the judgment described above. In this manner, the RAM array 14 is scanned in X direction to search the rod 10 at step 120 shown in Fig.6.

Upon detection of the transverse profile of the rod 10, the center position (Xs, Ys) of eleven address positions is stored as the trace start position of the rod 10 and the direction of trace from the trace start position is designated as a down direction (positve Y direction)by writing 2 in a Flag FUD showing scanning direction (up or down) at step 121 thus selecting the start position (Xs, Ys) as the reference position Xm, Yn at step 122.

Then at step 123, the reference position (Xm, Yn) is displaced by one picture element in the positive Y direction, and at step 124 a picture image data DAT (-6) - DAT (6) are derived out from contiguous thirteen address positions (Xm-6, Yn) - (Xm + 6, Yn) about the displaced reference position. At step 125, evaluation values H(-1), H(0) and H(1) respectively representing the degrees of approximation of the reference pattern with respect to three brightness patterns of DAT (-6) - DAT (4), DAT (-5) - DAT (5) and DAT (-4) - DAT (6) respectively are determined. The address positions in the X direction and at the center positions of these three brightness patterns are respectively displaced by one picture element, on the negative side, zero picture element and one picture element on the positive side with reference to the reference position.

Then at step 126, the maximum evaluation value H (P) is determined among the three evaluation values H(-1), H(0) and H(1) determined in step 125, and at step 127 a judgment is made as to whether the maximum evaluation value H(P) shows the transverse profile of the rod 10 or not.

When the result of judgment at step 127 is YES, at step 128, the shift quantitiy P in X direction (P = -1, 0 or 1) is added to m. Then at step 129, a judgment is made as to whether FUD = 2, and when the result of this judgment is YES, the step 123 is executed again followed by steps 124, 125 and 126 in which the address position (Xm, Yn) having contents m and n thus obtained is used as a near reference position. The step 129 is provided to judge whether the tracing is to be made in the downward direction or not and in this example it selects a flow line to step 123.

Since the transverse profile of the rod 10 is traced in this manner, even when the rod 10 is inclined at the maximum angle of 45° with respect to Y direction, it is possible to trace the cross-section of the rod 10.

When the trace is completed up to one end of the rod 10 and the result of the judgment at step 127 shows that the evaluation value H(P) does not show the cross-section of the rod 10, at step 130 a judgment is made as to whether FUD = 2 or not. When the result of this judgment is YES, at step 131, the previous reference position (Xm, Yn-1) is stored as the address position (Xt, Yt) of one end of the rod 10.

Then at step 132, 1 is written into FUD to designate the direction of trace of the rod 10 to the upper direction (negative Y direction), and at step 133 the start position (Xs, Ys) is again set to the reference position (Xm, Yn).

Then at step 134, the reference position (Xm, Yn) is shifted by one picture element in the negative Y direction and the steps 124, 125 and 126 are executed based on the shifted reference position. Then at step 127, a judgment is made as to whether the maximum evaluation value H(P) represents the transverse profile of the rod 10 or not.

When the result of judgment at step 127 is YES, a X direction shift quantity P( = -1, 0 or 1) is added to m at step 128. At step 129 a judgment is made again whether FUD = 2 or not and when the result of judgment is no at step 134 1 is subtracted from n and then the steps 124, 125 and 126 are executed by using the address position (Xm, Yn) thus obtained as a new reference position.

When the tracing up to the other end of the rod 10 has completed, and when the result of judgment at step 127 is no at step 130 a judgment is made whether FUD = 2 or not. When the result of this judgment is NO, at step 135 the previous reference position (Xm, Yn + 1) is stored as the address position (Xb, Yb) of the other end of the rod.

When the address position (Xt, Yt) and (Xb, Yb) at both ends of the rod 10 are determined in a manner as above described, at step 136, the distance between the two positions is calculated and at step 137 a judgment is made as to whether the calculated distance DS is equal to distance L corresponding to the length of the rod 10.

When the result of judgment of step 137 is YES, it is judged that a proper rod exists and at step 138, the position of the center of gravity (Xg, Yg) and the inclination angle B of the rod are calculated to output data representing the position of the center of gravity and the inclination angle which were calculated previously, thus completing a series of processings of the picture image.

When distance DS does not coincide with distance L, it is judged that the rod 10 is not proper, and at step 139 a signal indicating that the rod is not proper is outputted, thus completing a series of processings of the picture image. Noncoincidence of distances DS and L occurs in such case while searching the rod by scanning in X direction when the crossing of the rod is erroneously detected due to noise so that trace is made in Y direction, when the rod is inclined at an angle larger than 45°, and when another rod is overlying one rod. Accordingly when a signal representing improper condition is issued, the scanning is made again in the X direction from the start position (Xs, Ys) to search the rod or the direction of scanning is changed and the ITV camera 11 is rotated over a predetermined angle for changing the input picture image and thereafter the same processings as above described are executed.

The data outputted from step 139 and representing the position of the center of gravity (Xg, Yg) and the inclination angle $\theta$ of the rod are applied to a handling robbot, for example, so that the robbot can correctly grasp the rod 10 according to the inputted data.

Further, in this embodiment, the objects to be detected were rods having a circular cross-section, the objects may have other configurations, for example, a hexagonal cross-section. Further, the object may have pin head at one or both ends thereof. In other words, any object having a uniform cross-sectional configuration for a predetermined length can be detected.

Moreover, it is possible to trace and search an object in the longitudinal direction in accordance with the cross-sectional position thereof. Moreover, as it is judged that a proper rod presents when the distance of tracing and search corresponds to the length of a predetermined section of the object, an accurate judgment can be made even under adverse optical environment or even when rods contact or overlap with each other or scattered randomly.

Furthermore, it is also possible to detect the position of the center of gravity and the direction of the object. Moreover, at the time of tracing and search, since the threshold value corresponding to an evaluation value is varied in relation thereto, the evaluation value can be correctly evaluated.

A method determining a threshold value acting as a reference value for judging whether the evaluation value represents the cross-section of the rod or not, at the time of tracing the cross-section of the rod will now be described. The basic concept of the method of the threshold value will firstly be considered. A continuous evaluation value obtained by tracing the cross-section of the rod may continously exceed a threshold value set to correspond to this evaluation value. When the evaluation value greatly exceeds the threshold value the probability in which the succeeding evaluation values exceed the threshold values is high.

In such case, the threshold value is set to be low. Then even when succeeding evaluation values contain noise, there is no fear of erroneous evaluation.

Let us denote continuous evaluation values by

$y_1, y_2, ..., y_{n-1}, y_n, y_{n+1} ...,$

and the threshold value corresponding to the evaluation value $y_n$ by $Y_n$.

According to this invention, the threshold value $Y_n$ is varied as a function of the evaluation value $y_{n-1}, y_{n-2}, ...$ preceding an evaluation value $y_n$ according to the following equation

$$Y_n = Y_0 + f(y_{n-1}, y_{n-2}, y_{n-3}, ...)$$

where $Y_0$ designates a constant. Thus, $Y_0$ is a constant threshold value suitably preset corresponding to evaluation values $y_1, y_2 .....$

Where the threshold value $Y_n$ is expressed as a linear combination of the evaluation values $y_{n-1}, y_{n-2}, ...,$ the following equation can be obtained.

$$Y_n = Y_0 + \Sigma_{i=1}^{n-1} a_{n-i} Y_{n-i}$$

where coefficient $a_{n-i}$ is a weight representing the degree of contribution of the $i^{th}$ evaluation value $y_{n-i}$ preceding $y_n$ for determining the threshold value. Usually, as i increases, the coefficient $a_{n-i}$ decreases. More particularly, as shown by the following equation (12) the threshold value $Y_n$ ismade to decrease when the evaluation values $y_{n-1}, y_{n-2} ...$ are large.

$$Y_n = Y_0 - 0.8 y_{n-1} - 0.2 y_{n-2} ... \quad (1)$$

in which $a_{n-i}$ (i = 1, 2 ... n-1) is used as the weight. However, the threshold value $Y_n$ has a positive lower limit value $Y_{min}$ so that where $Y_n < Y_{min}$ irrespective of equation (1) it is made that $Y_n = Y_{min}$.

In connectional computers, it is easy to process the threshold value $Y_n$ when it is determined nonlinearly and stepwisely in the presence of the evaluation values $y_{n-1}, y_{n-2}...$ as shown by the following equations.

$$
\begin{aligned}
Y_n &= 0.8Y_0 \; ; \quad 2Y_0 > Y_{n-1} \geqq Y_0 \ U \ 2Y_0 > y_{n-2} \geqq Y_0 \\
&= 0.6Y_0 \; ; \quad y_{n-1} \geqq 2Y_0 \ U \ y_{n-2} \geqq 2Y_0 \quad \text{or} \\
&\qquad\qquad 2Y_0 > y_{n-1} \geqq Y_0 \cap 2Y_0 > y_{n-2} \geqq Y_0 \\
&= 0.4Y_0 \; ; \quad y_{n-1} \geqq 2Y_0 \cap y_{n-2} \geqq 2Y_0 \\
&= Y_0 \qquad ; \quad \text{when } y_{n-1} \text{ and } y_{n-2} \text{ are on the outside}
\end{aligned}
$$

$$ \cdots (2) $$

of the range described above.

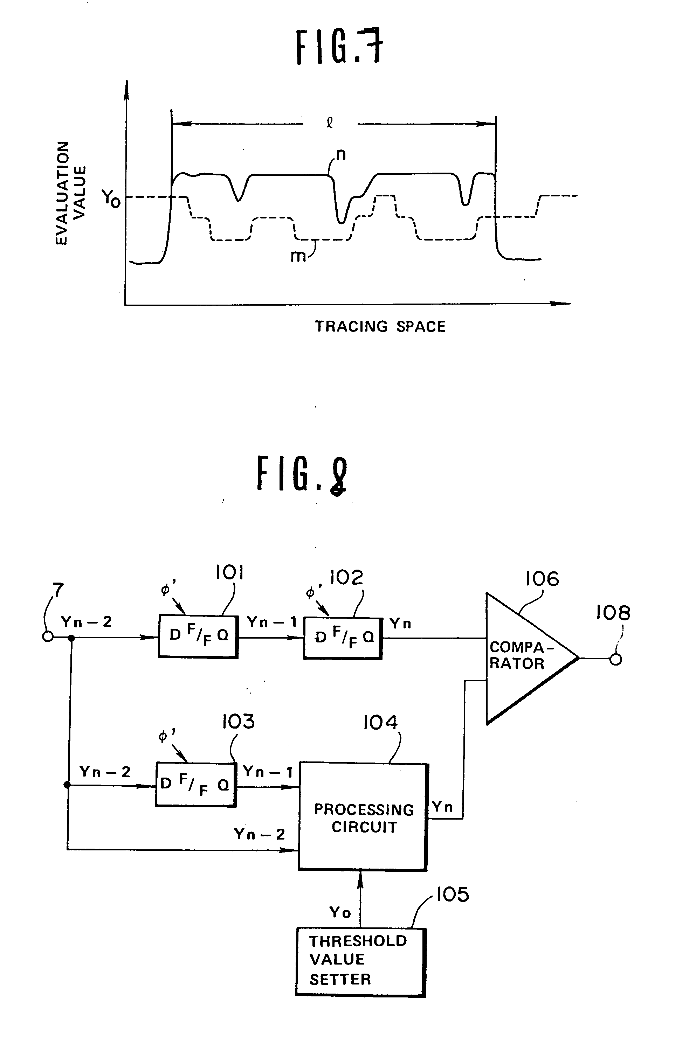

The threshold value shown by dotted lines in Fig. 7 is obtained by varying it as above described with reference to the evaluation value shown by a solid line. By varying the threshold value in this manner, a region I (tracing distance) in which the evaluation value becomes larger than the threshold value becomes to correspond to the actual length of the rod.

Fig.8 is a block diagram showing one example of the apparatus for carrying out the method of determining the threshold value according to this invention. The apparatus is constituted by delay flip-flop circuits 101, 102 and 103, a precessing circuit 104, a threshold value setter 105 and a comparator 106.

Each of the flip-flop circuits 101, 102 and 103 delays an inputted evaluation value by an interval of a high speed clock pulse $\emptyset'$ and then outputs the delayed signal. Accordingly, where an evaluation value $y_{n-2}$ is inputted to an input terminal, the delay flip-flop circuits 101 and 103 output an evaluation value $y_{n-1}$ delayed from the evaluation value $y_{n-2}$ by the interval of the high speed clock pulse $\emptyset'$, whereas the delay flip-flop circuit 102 outputs an evaluation value $y_n$ delayed from the evaluation value $y_{n-1}$ by the interval of the high speed clock pulse $\emptyset'$.

The processing circuit 104 receives the evaluation value $y_{n-1}$ from the delay flip-flop circuit 103, the evaluation value $y_{n-2}$ from the input terminal 107 and a constant threshold value $Y_0$ from the threshold value setter 105. The constant threshold value has been suitably preset corresponding to evaluation values $y_1$, $y_2$ ... by the threshold value setter 105. Based upon the inputted evaluation values $y_{n-1}$ and $y_{n-2}$ and the constant threshold value $Y_0$, the processing circuit 104 executes the operation shown by equation (12) or (13) to output a threshold value $Y_n$.

The comparator 106 compares the evaluation value $y_n$ fromthe delay flip-flop circuit 102 with the threshold value from the processing circuit 4 to produce a signal indicating that whether the evaluation value $y_n$ is larger than the threshold value or not. For example, when the evaluation value $y_n$ is larger than the threshold value, a high level signal is produced at an output terminal where, as when the former is smaller than the latter, a low level signal is produced.

As above described, by varying the threshold value $y_n$ in dependence on evaluation values $y_{n-1}$ and $y_{n-2}$ preceding the evaluation value $y_n$, it is possible to more accurately evaluate the evaluation value $y_n$ having a continuous property.

Further, in this embodiment, in tracing a rod in the longitudinal direction, the evaluation value with respect to the brightness pattern in the transverse profile of the rod is utilized as the evaluation value having continuity, the present invention may apply to output signal and the like of the ordinary sensor as long as continuity is maintained in microscopic sense.

While in the foregoing embodiment, at the time of evaluating an evaluation value $y_n$, a threshold value $Y_n$ was varied in accordance with two evaluation value $y_{n-1}$ and $y_{n-2}$ prior to be evaluation value $y_n$, the threshold value $Y_n$ may be varied with only one evaluation.

As above described, since according to the present invention, the threshold value corresponding to an evaluation value is varied in relation thereto, the evaluation value can be correctly evaluated. For example, as shown in the embodiment, in case an evaluation value exceeds continuously or greatly a threshold value the threshold value is varied lower so that erroneous evaluation of the evaluation value caused by noise can be avoided at evaluating the evaluation value having continuity. In particular, when the present invention is applied for tracing pattern, edge, etc. in the picture image processing, it is possible to accurately identify configuration of the object.

**Claims**

1. A method of identifying rod-like objects (10), having a uniform transverse profile over a predetermined length (L) thereof comprising the steps of:

preparing a reference pattern representing brightness of a predetermined number of picture elements in a transverse direction of said objects, said reference pattern being picture image data of said objects having a uniform transverse profile over a predetermined length (L) thereof;

sequentially extracting a set of object brightness patterns of a predetermined number of picture elements which lie contiguously in a X direction of rectangular coordinates from picture image data in a predetermined field of view in which said objects lie, while shifting successive said brightness patterns by one picture element in said X direction;

detecting (120) a time at which said objects are crossed on the basis of comparison between said object brightness pattern and said reference pattern;

after detecting said time, extracting three object brightness trace search patterns of a predetermined number of picture elements regarding respectively a first position displaced (123) by one picture element on a positive side in a Y direction of said rectangular coordinate with reference to a reference position $(X_m, Y_m)$ corresponding to a position at which the transverse profile of the object is detected, said first position being displaced by one picture element on a negative side (DAT (-6)) of said X direction with respect to said reference position, a second position same as (DAT(0)) said reference position and a third position displaced by one picture element on a positive side (DAT(6)) with reference to said reference position $(X_m, Y_m)$;

selecting (126) an object brightness trace pattern most resembling said reference pattern among said three object brightness trace search patterns;

judging (127) whether said selected object brightness trace pattern is the object brightness pattern or not when said objects (10) are crossed based on said selected object brightness trace pattern and said reference pattern;

extracting further three object brightness trace search patterns by using a position of said selected object brightness trace pattern as a new reference position when said object brightness trace pattern is a pattern at the time of crossing said objects (129, 123, 124);

repeating said judgment (127);

storing (131) the previous reference position $(X_t, Y_t)$ of an object brightness trace pattern when the same is not the object brightness pattern at the time of crossing;

processing (134) the negative side in said Y direction by using a position at which said crossing is detected as a reference position in the same manner as on the positive side in said Y direction;

storing (135) the previous reference position $(X_b, Y_b)$ at which said trace pattern ceases to be the brightness pattern at the time of crossing said objects;

determining (136) a distance (DS) between said stored two reference positions, and identifying (137) that a proper object is present when said distnce (DS) corresponds to said predetermined length (L) of said objects.

2. A method of identifying rod-like objects according to claim 1 comprising the steps of:

preparing a reference pattern representing brightness of a predetermined number of picture elements in a transverse direction of objects to be identified, said reference pattern being picture image data of said objects having a uniform transverse profile over a predetermined length (L) thereof;

sequentially extracting a set of object brightness patterns of a predetermined number of picture elements which lie contiguously in a X direction of rectangular coordinates from picture image data in a predetermined field of view in which said objects lie, while shifting successive said brightness patterns by one picture element in said X direction;

detecting (120) a crossing time of said objects on the basis of comparison between said object brightness patterns and said reference patterns;

tracing (121 - 135) in a Y direction of said rectangular coordinates a position of crossing said objects by utilizing a crossing detection position as a reference position; and

while tracing, setting a threshold value $Y_n$ for a given evaluation value $y_n$ among successive groups of evaluation values representing a similarity between said object brightness trace patterns and said reference patterns as a function in which one or more evaluation values preceding said given evaluation value are variables,

said threshold value $y_n$ having the relation

$$y_n = y_0 + \sum_{i=1}^{n-1} a_{n-1}\, y_{n-i}$$

where $a_{n-i}$ is a weighting coefficient representing the contribution of the $i^{th}$ preceeding evaluation value $y_{n-i}$ with $a_{n-i}$ generally decreasing as i increases such that said threshold value $y_n$ is samller than a constant threshold value $y_0$ when said one or more preceding evaluation values greatly exceeds said constant threshold value $y_0$ preset for said group of said evaluation values.

**Revendications**

1. Procédé pour identifier des objets cylindriques (10) ayant un profilé transversal uniforme sur une longueur prédéterminée (L), comprenant les étapes consistant à :

préparer un modèle de référence représentant la brillance d'un nombre prédéterminé d'éléments d'image dans une direction transversale de ces objets, le modèle de référence étant constitué par les données d'image des objets ayant un profilé transversal uniforme sur sa longueur prédéterminée (L) ;

à extraire séquentiellement une série de modèles de brillance d'objet d'un nombre prédéterminé d'éléments d'image qui se situent de façon contiguë dans une direction X de coordonnées rectangulaires à partir des données d'image dans un champ de vision prédéterminé dans lequel se situent ces objets, tout en déplaçant les modèles de brillance successifs d'un élément d'image dans la direction X ;

à détecter (120) un temps où les objets sont traversés sur la base de comparaison entre le modèle de brillance d'objet et le modèle de référence ;

après avoir détecté ce temps, à extraire trois modèles de recherche de trace de brillance d'objet d'un nombre prédéterminé d'éléments d'image concernant respectivement une première position déplacée (123) d'un élément d'image sur un côté positif dans une direction Y de la coordonnée rectangulaire par rapport à une position de référence (Xm, Ym) correspondant à une position sur laquelle est détecté le profité transversal de l'objet, cette première position étant déplacée d'un élément d'image sur un côté négatif (DAT(-6)) de direction X par rapport à la position de référence, une seconde position identique à (DAT(0)) la position de référence et une troisième position déplacée d'un élément d'image sur un côté positif (DAT(6)) par rapport à la position de référence (Xm, Ym) ;

à sélectionner (126) un modèle de trace de brillance d'objet ressemblant le plus au modèle de référence parmi les trois modèles de recherche de trace de brillance d'objet ;

à déterminer (127) si le modèle de trace de brillance d'objet sélectionné est le modèle de brillance d'objet ou ne l'est pas lorsque les objets (10) sont traversés en fonction du modèle de trace de brillance de de l'objet sélectionné et du modèle de référence ;

à extraire trois autres modèles de recherche de trace de brillance d'objet en utilisant une position de modèle de trace de brillance d'objet sélectionné en tant que nouvelle position de référence lorsque le modèle de trace de brillance d'objet est un modèle au temps de croisement des objets (129, 123, 124) ;

à répéter ce jugement (127) ;

à mémoriser (131) la position de référence préalable (Xt, Yt) d'un modèle de trace de brillance d'objet lorsque celui-ci n'est pas le modèle de brillance d'objet au temps de croisement ;

à traiter (134) le côté négatif dans la direction Y en utilisant une position à laquelle est détecté le croisement en tant que position de référence de la même manière que le côté positif dans la direction Y ;

à mémoriser (135) la position de référence préalable (Xb, Yb) à laquelle le modèle de trace cesse d'être le modèle de brillance au moment du croisement des objets ;

à déterminer (136) une distance (DS) entre les deux positions de référence mémorisées et à identifier (137) qu'un objet approprié est présent lorsque la distance (DS) correspond à la longueur prédéterminée (L) des objets.

2. Procédé d'identification d'objets cylindriques selon la revendication 1, comprenant les étapes consistant à :

préparer un modèle de référence représentant la brillance d'un nombre prédéterminé d'éléments d'image dans une direction transversale d'objets à identifier, le modèle de référence étant les données d'image des objets ayant un profit transversal uniforme sur une longueur prédéterminée (L) ;

à extraire séquentiellement une série de modèles de brillance d'objet d'un nombre prédéterminé d'éléments d'image qui se situent de façon contiguë dans une direction X de coordonnées rectangulaires à partir des données d'image dans un champ de vision prédéterminé dans lequel se situent les objets, tout en déplaçant les modèles de brillance successifs d'un élément d'image dans la direction X ;

à détecter (120) un temps de croisement des objets sur la base de comparaison entre le modèle de brillance d'objet et les modèles de référence ;

à tracer (121, 135) dans une direction Y de coordonnées rectangulaires une position de croisement des objets en utilisant une position de détection de croisement en tant que position de référence ; et

tout en traçant, fixer une valeur seuil Yn pour une valeur d'évaluation donnée $y_n$ parmi des groupes successifs de valeur d'évaluation représentant une similarité entre les modèles de trace de brillance d'objet et les modèles de référence en tant que fonction dans laquelle une ou plusieurs valeurs d'évaluation précédant la valeur d'évaluation donnée sont des variables, la valeur de seuil $y_n$ ayant la relation

$$y_n = y_o + \sum_{i=1}^{n-1} a_{n-1} \, y_{n-1}$$

dans laquelle $a_{n-i}$ est un coefficient de pondération représentant la participation de la $I^{ème}$ valeur d'évaluation précédente $y_{n-i}$ avec $a_{n-i}$ de façon générale décroissant à mesure que i augmente de sorte que la valeur de seuil $y_n$ est inférieure à une valeur de seuil constante $y_0$ lorsqu'une ou plusieurs valeurs d'évaluation précédentes dépassent fortement la valeur de seuil constante $y_0$ préétablie pour le groupe de valeurs d'évaluation.

## Patentansprüche

1. Verfahren zum Identifizieren von stabförmigen Objekten (10) mit einem gleichförmigen Querprofil über ihre vorherbestimmte Länge (L), **gekennzeichnet** durch die Schritte:

Vorbereiten eines Referenzmusters, welches eine Helligkeit einer vorherbestimmten Anzahl von Bildelementen in einer Querrichtung der Objekte darstellt, wobei das Referenzmuster Bild-Abbildungsdaten der Objekte sind, die ein gleichförmiges Querprofil über ihre vorherbestimmte Länge (L) haben;

sequentielles Extrahieren eines Satzes von Objekthelligkeitsmustern einer vorherbestimmten Anzahl von Bildelementen, welche einander berührend in X-Richtung rechteckiger Koordinaten liegen, aus Bild-Abbildungsdaten in einem vorherbestimmten Blickfeld, in welchem die Objekte liegen, während die Helligkeitsmuster um ein Bildelement in der X-Richtung sukzessive verschoben werden;

Feststellen (120) eines Zeitpunkts, an dem sich die Objekte auf der Basis eines Vergleichs zwischen dem Objekthelligkeitsmuster und dem Referenzmuster kreuzen;

nach Feststellen des Zeitpunkts Extrahieren von drei Objekthelligkeits-Spursuchmustern einer vorherbestimmten Anzahl von Bildelementen bezüglich einer ersten Position, welche um ein Bildelement auf der positiven Seite in Y-Richtung der rechteckigen Koordinaten bezüglich einer Referenzposition (Xm, Ym) versetzt ist (123), welche einer Position entspricht, in welcher das Querprofil des Objekts festgestellt wird, wobei die erste Position um ein Bildelement auf der negativen Seite (DAT (-6)) der X-Richtung bezüglich der Referenzposition versetzt wird, bezüglich einer zweiten Position, die als (DAT(0)) hinsichtlich der Referenzposition festgelegt ist, und bezüglich einer dritten Position, welche um ein Bildelement auf einer positiven Seite (DAT(6)) bezüglich der Referenzposition (Xm, Ym) versetzt ist;

Auswählen (126) eines Objekthelligkeits-Spurmusters, das unter den drei Objekthelligkeits-Spursuchmustern dem Referenzmuster am ähnlichsten ist;

Beurteilen (127) auf der Basis des ausgewählten Objekthelligkeits-Spurmusters und des Referenzmusters, ob das ausgewählte Objekthelligkeits-Spurmuster das Objekthelligkeitsmuster ist oder nicht, wenn sich die Objekte (10) kreuzen;

Extrahieren von drei weiteren Objekthelligkeits-Spursuchmuster mit Hilfe einer Position des ausgewählten Objekthelligkeits-Spurmusters als einer neuen Referenzposition, wenn das Objekthelligkeits-Spurmuster ein Muster zum Kreuzungszeitpunkt der Objekte (129,123,124) ist;

Wiederholen des Beurteilungsschrittes (127);

Speichern (131) der vorherigen Referenzposition (Xt, Yt) eines Objekthelligkeits-Spurmusters, wenn dasselbe nicht das Objekthelligkeitsmuster zum Kreuzungszeitpunkt ist;

Verarbeiten (134) der negativen Seite in der Y-Richtung durch Benutzen einer Position, an welcher das Kreuzen festgestellt worden ist, als eine Referenzposition in derselben Weise wie auf der positiven Seite in der Y-Richtung;

Speichern (135) der vorherigen Referenzposition (Xb, Yb), an welcher das Sparmuster aufhört, das Helligkeitsmuster zu sein zum Zeitpunkt des Kreuzens der Objekte;

Bestimmen (136) eines Abstandes (DS) zwischen den gespeicherten zwei Referenzpositionen, und

Identifizieren (137), daß ein passendes Objekt vorhanden ist, wenn der Abstand (DS) der vorherbestimmten Länge (L) der Objekte entspricht.

2. Verfahren zum Identifizieren von stabförmigen Objekten nach Anspruch 1, **gekennzeichnet** durch die Schritte:

Vorbereiten eines Referenzmusters, das eine Helligkeit einer vorherbestimmten Anzahl von Bildelementen in einer Querrichtung von zu identifizierenden Objekten darstellt, wobei das Referenzmuster Bild-Abbildungsdaten der Objekte sind, die ein gleichförmiges Querprofil über ihre vorherbestimmte Länge aufweisen;

sequentielles Extrahieren eines Satzes von Objekthelligkeitsmustern einer vorherbestimmten Anzahl von Bildelementen, welche einander berührend in X-Richtung rechteckiger Koordinaten liegen, aus Bild-Abbildungsdaten in einem vorherbestimmten Blickfeld, in welchem die Objekte liegen, während die Helligkeitsmuster um ein Bildelement in der X-Richtung sukzessiv verschoben werden;

Feststellen (120) eines Kreuzungszeitpunkts der Objekte auf der Basis eines Vergleichs zwischen den Objekthelligkeitsmustern und den Referenzmustern;

Aufspüren (121 bis 135) einer Kreuzungsposition der Objekte in Y-Richtung der rechteckigen Koordinaten, indem eine festgestellte Kreuzungsposition als eine Referenzposition benutzt wird, und

während des Aufspürens Setzen eines Schwellenwerts Yn für einen vorgegebenen Auswertungswert $y_n$ aus aufeinanderfolgenden Gruppen von Auswertungswerten, welche eine Ähnlichkeit zwischen den Objekthelligkeits-Spurmustern und den Referenzmustern als eine Funktion darstellen, in welcher ein oder mehrere Auswertungswerte, welche dem vorgegebenen Auswertungswert vorangehen, veränderlich sind,

wobei der Schwellenwert $y_n$ die Beziehung hat:

$$y_n = y_o + \sum_{i=1}^{n-1} a_{n-1} Y_{n-1}$$

wobei $a_{n-1}$ ein Wichtungskoeffizient ist, welcher den Beitrag des vorhergehenden i-ten Auswertungswertes $y_{n-1}$ darstellt, wobei $a_{n-1}$ im allgemeinen abnimmt, wenn i zunimmt, so daß der Schwellenwert $y_n$ kleiner als ein konstanter Schwellenwert $y_0$ ist, wenn der eine oder mehrere vorhergehende Auswertungswerte den konstanten Schwellenwert $y_0$ sehr überschreiten, welcher für die Gruppe der Auswertungswerte voreingestellt worden ist.

FIG. 1

# FIG.2

# FIG.3

# FIG.4

SYNCHRONOUS
SEPARATING
CIRCUIT

12

ITV
CAMERA

11

A/D
CONVERTER

13

14

RAM ARRAY

(256 x 256)

BUS LINE

CPU

16

MEMORY
(RAM/ROM)

15

# FIG. 5

# FIG. 6

```
      START

        │
        ▼                          ┌──▶│
   ┌──────────┐ 120    ┌──────────────┐ 126
   │SEARCH ROD│        │DETERMINE     │
   │BY SCANNING│       │MAX. EVALUATION│
   └──────────┘        │VALUE H (p)   │
        │              │(P = −1, 0, 1)│
        ▼ 121          └──────────────┘
   ┌──────────┐              │ 127
   │TRACE START│             ▼
   │DIRECTION  │        ╱ DOES ╲         NO
   │(Xs, Ys)   │       ╱ MAX.   ╲────────────────
   │TRACING    │       ╲ EVALUATION╱
   │DIRECTION  │        ╲VALUE H (p)╱
   │FUD ← 2    │         ╲ SHOW   ╱
   │(DOWNWARD) │          ╲ ROD? ╱  128
   └──────────┘              │ YES
        │ 122                ▼
   ⬡ Xm ← Xs ⬡        ┌──────────┐
     Yn ← Ys          │ m ← m+P  │
        │             └──────────┘
        │                  │ 129
        │          YES  ╱ FUD ╲  NO
        │◀───────────╱ = 2 ? ╲──────────
        │             ╲      ╱
        ▼ 123
   ┌──────────┐
   │ n ← n+1  │
   └──────────┘
```

Xt ← Xm    131
Yt ← Yn−1

Xb ← Xm    135
Yb ← Yn+1

TRACING DIRECTION FUD ← 1 (UPWARD)    132

Xm ← Xs    133
Yn ← Ys

n ← n−1    134

$DS \leftarrow \sqrt{(Xt - Xb)^2 + (Yt-Yb)^2}$    136

FUD = 2 ?    130  NO

$DS = L$ ?    137

Xg ← (Xt + Xb) / 2
Yg ← (Yt + Yb) / 2
△X ← Xt − Xb
△Y ← Yt − Xb
$\theta \leftarrow \tan^{-1}(\triangle Y / \triangle X)$    138

NOT SUITABLE    140

(Xg, Yg) θ    139

END

DAT(−6) ← (Xm − 6, Yn)    124
DAT(0) ← (Xm, Yn)
DAT(6) ← (Xm−6, Yn)

H(−1) ← DAI(−6)~DAI(4)    125
H(0) ← DAI(−5)~DAI(5)
H(1) ← DAI(−4)~DAI(6)

# FIG.7

# FIG.8